(19) Europäisches Patentamt / European Patent Office / Office européen des brevets

(11) **EP 3 267 149 A1**

(12) **EUROPEAN PATENT APPLICATION**
published in accordance with Art. 153(4) EPC

(43) Date of publication:
**10.01.2018 Bulletin 2018/02**

(51) Int Cl.:
*G01B 21/32* (2006.01)　　　*G01L 1/06* (2006.01)
*G01M 99/00* (2011.01)

(21) Application number: **16755580.4**

(22) Date of filing: **24.02.2016**

(86) International application number:
**PCT/JP2016/055517**

(87) International publication number:
**WO 2016/136836 (01.09.2016 Gazette 2016/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.02.2015 JP 2015034950**
　　　　　　**10.06.2015 PCT/JP2015/066747**

(71) Applicant: **NGK Insulators, Ltd.**
**Nagoya-City, Aichi Pref. 467-8530 (JP)**

(72) Inventors:
- **KURIBAYASHI Kenichi**
  **Tokyo 151-8578 (JP)**
- **KONISHI Toshiyuki**
  **Tokyo 151-8578 (JP)**
- **SUE Masaki**
  **Tokyo 151-8578 (JP)**
- **KONDO Atsuo**
  **Nagoya-shi**
  **Aichi 467-8530 (JP)**
- **WATANABE Keiichiro**
  **Nagoya-shi**
  **Aichi 467-8530 (JP)**
- **IWASAKI Shingo**
  **Nagoya-shi**
  **Aichi 467-8530 (JP)**
- **YAMANAKA Ryoichi**
  **Nagoya-shi**
  **Aichi 467-8530 (JP)**
- **WATANABE Yoshinobu**
  **Nagoya-shi**
  **Aichi 467-8530 (JP)**

(74) Representative: **Naylor, Matthew John**
**Mewburn Ellis LLP**
**City Tower**
**40 Basinghall Street**
**London EC2V 5DE (GB)**

(54) **STRUCTURE FOR STRAIN DETECTION**

(57)　　The present invention relates to a structure for strain detection. This structure for strain detection is provided with a ceramic main body (12) which is attached to the detection target, in which strain is to be detected, and with a stress concentration area (14) which is formed in said main body (12) and which is destroyed when at least a prescribed strain is present. Defining the dimension of the entire main body (12) in one direction as Lm and the dimension of the stress concentration area (14) in that direction as Lc, it holds that Lc < Lm, and the stress concentrated area (14) is optionally configured to be a thin area in said direction.

FIG. 2A

EP 3 267 149 A1

**Description**

Technical Field

The present invention relates to a structure for detecting strain, and more particularly, relates to a strain detecting structure, which is suitable for detecting a strain, for example, in a metal frame, a pressure vessel, a concrete structure, and a reinforced concrete structure or the like. The term "strain" as used herein includes the meanings of both strain as a phenomenon and an amount of strain as a physical quantity, and in the case that an amount of strain is clearly indicated, the term "strain amount" will be used.

Background Art

Conventionally, as a displacement detecting device for measuring mechanical strain and displacement of a building or structure, the displacement detecting device disclosed in Japanese Laid-Open Patent Publication No. 2000-065508 is known. Further, as a device for evaluating fatigue and damage of a structure, the fatigue and damage evaluation device disclosed in Japanese Laid-Open Patent Publication No. 2002-014014 is known. In general, buildings and structures of this type are constructed so that principal stresses thereof are supported by structural bodies constituted by a steel material.

As a steel material used primarily for construction, mild steel (SS400 or the like) is included, and with respect to a tensile strength 426 Pa thereof, such a steel material is designed with a safety factor of 3 (140 MPa) with a static load over a long period, and a safety factor of 5 (85 MPa) with a pulsating repeated load. Further, the yield point (proof stress) of mild steel is assumed to be 245 MPa.

Since the Young's modulus of mild steel is about 200 GPa, the amount of elastic deformation strain at respective stresses is 0.07%, 0.04%, and 0.12%, and if it were possible to quantitatively detect the occurrence of such amounts of strain, then one could effectively evaluate the degree of damage of a structure. However, since the amount of strain is extremely small, in order to be detected, it has been necessary to use a sophisticated and complicated type of measuring device, such as those described below.

The displacement detection device disclosed in Japanese Laid-Open Patent Publication No. 2000-065508 includes a lever mechanism attached to a structural member such as a building or a structure, and which magnifies a strain or displacement amount generated in the structural member, and a displacement detector which detects a displacement amount that is magnified or reduced by the lever mechanism.

The fatigue and damage evaluation device disclosed in Japanese Laid-Open Patent Publication No. 2002-014014 includes a deformation amount detecting means for detecting an amount of deformation of a structure to be evaluated, a fatigue and damage rate detecting means for detecting a fatigue and damage rate of the structure to be evaluated in accordance with the deformation amount detected by the deformation amount detecting means, and a fatigue and damage rate integrating means for integrating the fatigue and damage rate detected by the fatigue and damage rate detecting means.

Summary of Invention

It is necessary to provide displacement detectors for the displacement detecting device disclosed in Japanese Laid-Open Patent Publication No. 2000-065508, and due to the fact that switches such as micro-switches or the like are used as such displacement detectors, it is necessary to provide wiring to a power source and to the various sensors, and the detection operations are troublesome to set up and perform.

Since the deformation amount detecting means of the fatigue and damage evaluation device disclosed in Japanese Laid-Open Patent Publication No. 2002-014014 is constituted completely by a mechanical structure, no power source or wiring is necessary. However, because the device is made up from a first fixing plate, a second fixing plate, a movable bar, and a rotary shaft, the structure of the device is complicated.

The present invention has been devised taking into consideration the aforementioned problems, and has the object of providing a structure for strain detection, which enables confirmation of strains generated in a structure with an inexpensive device and by visual inspection (including visual inspection through use of binoculars or the like), and without requiring a sophisticated, complex, and expensive power source and electrical wiring.

Furthermore, another object of the present invention is to easily detect the presence or absence of a history of occurrence of strain amounts exceeding an allowable stress level over a period of time, when a structure is used over a prolonged time period, and an unexpected load is caused by a natural disaster such as a typhoon, an earthquake, or the like.

[1] A structure for strain detection according to the present invention is characterized by being made of a material that is elastically deformable without plastic deformation, and which is attached to a target object (an object to be inspected) in which strain is to be detected, whereby the structure is fractured by elastic deformation that is equal to or greater than a predetermined strain.

Although ceramic and glass materials serve as materials that are capable of being fractured by an elastic deformation greater than or equal to a predetermined strain without plastic deformation, in the case of glass materials, minute cracks develop therein due to the influence of moisture in the atmosphere, and a deterioration in the strength of such materials tends to occur. Therefore, in order to detect amounts of strain over a prolonged time period, it is preferable to use a ceramic material having excellent durability. The ceramics used herein preferably are fractured with a strain amount that is greater than or equal to a strain amount corresponding to the allowable stress of the object to be inspected. More specifically, a ratio ($\sigma$/E) of a strength ($\sigma$: MPa) to a Young's modulus (E: GPa) of the structure for strain detection is preferably greater than or equal to 0.04%, more preferably, is greater than or equal to 0.1%, and particularly preferably, is greater than or equal to 0.3%.

Furthermore, in the case that the object to be inspected is used under a fixed temperature condition, although it is unnecessary to give particular consideration to the coefficient of thermal expansion of the structure for strain detection, in the case of buildings and structures that are installed outdoors, changes in temperature occur accompanying changes in the ambient temperature during the measurement period. In such a situation, in order to eliminate the influence of such a temperature change, the difference in the coefficient of thermal expansion between the structure for strain detection and the structure constituting the inspection target building preferably is less than or equal to $\pm 2$ ppm/K, and more preferably, is less than or equal to $\pm 1$ ppm/K. By selecting such a ceramic material, it becomes possible to detect, over a prolonged time period, the amount of strain of a structure that is installed outdoors, without the influence of such a temperature change. For example, in the case that the object to be inspected is a steel material or reinforced concrete, if zirconia or forsterite or the like having the same coefficient of thermal expansion as the object is selected, the amount of strain can be detected without the influence of such a temperature change.

[2] A stress concentrated section, which is fractured at a predetermined strain or greater, may further be provided in the main body of the structure for strain detection. In accordance with this feature, when a load is applied to the object to be inspected, and, for example, a predetermined strain occurs in the object to be inspected, a predetermined strain also occurs in the main body of the structure for strain detection, whereby the stress concentrated section is selectively fractured. Consequently, by confirming whether or not the stress concentrated section has been fractured, it can be confirmed whether or not a predetermined strain has taken place in the object to be inspected. When the level of the stress concentration is arbitrarily set upon devising the structure of the stress concentrated section, strain detecting ceramics can be manufactured having different levels for detecting amounts of strain. By disposing a plurality of strain detecting ceramics having different levels for detecting amounts of strain, it is possible to detect an arbitrary amount of strain, and more specifically, an amount of stress generated in the object to be inspected. Furthermore, such a confirmation can be easily performed by the naked eye, since it is merely necessary to confirm the presence or absence of breakage or fracturing in the stress concentrated section. Consequently, using the structure for strain detection of the present invention, it is possible to easily detect and confirm strains cheaply by way of visual inspection (including visual inspection using binoculars or the like), or by the presence or absence of simple electrical signals or the like, even after the strains have occurred in the object to be inspected over a prolonged time period, and without requiring an expensive and complicated power source and electrical wiring.

In the present invention, initially, by selecting materials having different ratios ($\sigma$/E) of strength to Young's modulus, it is possible to manufacture strain detecting ceramics which become fractured at an arbitrary amount of strain. For ceramics that do not undergo plastic deformation, the amount of strain ($\varepsilon$) under a predetermined level of stress is given by the following equation.

$$\varepsilon = \sigma/E \qquad\qquad ...(1)$$

Breakage or fracturing takes place when the strength $\sigma$ reaches the strength of the ceramic, and at this time, the amount of strain ($\varepsilon$) is expressed by equation (1). The values for $\sigma$/E for various materials are shown in Table 1, which will be discussed later. Such values are indicative of strain amounts at which respective ceramic or glass materials become fractured. For example, strain detecting ceramics composed of alumina A and which do not have a stress concentrated section therein undergo fracturing at a strain amount of 0.14%. Similarly, the strain detecting ceramics composed of silicon nitride A or mica undergo fracturing at a strain amount of 0.20%.

[3] Furthermore, a case in which a stress concentrated section is provided, so as to undergo breakage or fracturing at an arbitrary strain amount, will be explained below. Assuming a dimension of the entire main body in one direction thereof is represented by Lm, and a dimension of the stress concentrated section in the one direction is represented by Lc, then Lc < Lm, and the stress concentrated section may be constituted by a thin-walled portion in the one direction. Consequently, by suitably changing the dimension Lc of the stress concentrated section in the one direction, the main body can be fractured with a predetermined strain. For example, by providing a predetermined stress concentrated section in zirconia B, it becomes possible to design a strain detecting ceramic which is subjected to fracturing at an arbitrary displacement that is less than or equal to 0.56%.

[4] In this case, the one direction is a direction which is perpendicular to a longitudinal direction of the main body, as well as being perpendicular to a thickness direction of the main body.

[5] In the present invention, the main body preferably includes a structure portion (visualization structure) for visualizing the occurrence of the predetermined strain, by way of a secondary fracture, which is induced by a primary fracture of the stress concentrated section. Consequently, by visually confirming the state of the visualization structure, it is possible to easily confirm whether or not a predetermined strain has occurred in the main body.

[6] In this case, the visualization structure may include a thin-walled region that causes a portion of the main body to drop off due to the secondary fracture. In accordance with this feature, when a strain occurs in the main body and the stress concentrated section experiences a fracture (primary fracture), then taking this fracture as a starting point, fracturing (secondary fracturing) of the thin-walled region is induced, and a portion of the main body drops off. Consequently, by confirming whether or not the portion of the main body has fallen off, it can be confirmed whether or not a predetermined strain has taken place in the object to be inspected. Such a confirmation can easily be carried out with the naked eye.

[7] In this case, a length La of the main body is preferably greater than or equal to 10 mm and less than or equal to 300 mm, a width Lm of the main body is preferably greater than or equal to 5 mm and less than or equal to 100 mm, a thickness ta of a central portion of the main body is preferably greater than or equal to 0.3 mm and less than or equal to 3 mm, a thickness tae of each of both end portions of the main body is preferably greater than or equal to 1 mm and less than or equal to 10 mm and is thicker than the thickness ta of the central portion, and a thickness tb of the thin-walled region is preferably greater than or equal to 0.01 mm and less than or equal to 0.5 mm and is thinner than the thickness ta of the central portion.

[8] Furthermore, the thin-walled region may be provided in a frame shape, and one part of the main body may be a portion that is surrounded by the thin-walled region. In accordance with this feature, when a strain occurs in the main body and the stress concentrated section experiences a fracture (primary fracture), then taking this fracture as a starting point, a crack occurs in the thin-walled region. The crack expands in a frame shape along the thin-walled region due to the presence of the one part of the main body, whereupon breakage or fracturing (secondary fracturing) of the thin-walled region is induced.

[9] Further, at least one through hole may be formed in the thin-walled region. In this case, when the stress concentrated section experiences a fracture (primary fracture) and a crack occurs in the thin-walled region, development of the crack is accelerated due to the presence of the through hole, and the one part of the main body can assuredly be made to drop off at an early stage.

[10] In any of features [5] to [9] discussed above, the visualization structure may include a visible member that is exposed by the secondary fracture. In accordance with this feature, by the one part of the main body dropping off, the visible member becomes exposed, and thus, by confirming the exposure of the visible member, an observer can easily realize that a predetermined strain has occurred in the main body.

[11] In any of features [5] to [9] discussed above, the visualization structure may include a conductive ceramic, the electrical characteristics of which are changed by the secondary fracture.

[12] In any of features [2] to [4] discussed above, one through hole may be included in the main body, and a curved portion of the through hole may constitute a part of the stress concentrated section.

[13] In this case, the through hole may be rectangular, and two apex portions thereof that constitute a part of the stress concentrated section may be formed respectively in a curved shape.

[14] In the present invention, the ceramic constituting the main body preferably contains zirconia.

[15] In the present invention, the predetermined strain preferably is a strain in a range within which the target object is elastically deformed.

[16] In the present invention, both end portions of the main body may be formed respectively to be thick-walled, and steps may be formed respectively between the central portion of the main body and both of the end portions. In this case, boundary portions between each of the steps and the central portion of the main body are preferably formed in a curved shape, whereby concentration of stresses can be alleviated by the boundary portions.

[17] In this case, the boundary portions are preferably formed in a curved shape having a radius of curvature of 0.5 mm R or greater. The term 0.5 mm R represents the radius of curvature of the curved shape.

[18] In either of features [16] or [17] above, the main body preferably is fixed to the object to be inspected using respective thick-walled sections of both of the end portions.

[19] In feature [18] above, the respective thick-walled sections of both of the end portions preferably are bonded and fixed to the target object. Further, assuming that a length of each of the thick-walled sections at both of the end portions along a lengthwise direction of the main body represents a length Lae of the thick-walled sections, and a length of the thick-walled sections along a widthwise direction of the main body represents a width Lme of the thick-walled sections, then concerning each of the thick-walled sections, the areas of each of the thick-walled sections, which are obtained respectively by multiplying the length Lae of the thick-walled sections times the width Lme of the thick-walled sections, preferably are equivalent to each other. In addition, the areas of each of the thick-walled sections are areas sufficient to support a load generated in the structure for strain detection when the target object reaches a predetermined amount of strain.

[20] In this case, assuming that a tensile shear adhesive strength of an adhesive by which the respective thick-walled sections of both of the end portions are bonded and fixed to the target object is represented by F ($N/mm^2$), the area of each of the respective thick-walled sections is represented by A ($mm^2$)), and the load generated in the structure for strain detection when the target object reaches the predetermined amount of strain is represented by L, then preferably, the inequality A > L/F is satisfied.

In accordance with the structure for strain detection according to the present invention, it is possible to confirm the presence of strains generated in a structure with an inexpensive device and by visual inspection (including visual inspection through use of binoculars or the like), and without requiring an expensive and complicated power source and electrical wiring. Furthermore, it is possible to easily detect the presence or absence of a history of occurrence of strain amounts exceeding an allowable stress level over a period of time, when a structure is used over a prolonged time period, and an unexpected load is caused by a natural disaster such as a typhoon, an earthquake, or the like.

Brief Description of Drawings

FIG. 1A is a plan view showing a structure for strain detection (a first structure for strain detection) according to a first embodiment as viewed from above, FIG. 1B is a cross-sectional view taken along line IB-IB in FIG. 1A, and FIG. 1C is a cross-sectional view taken along line IC-IC in FIG. 1A;

FIG. 2A is a plan view showing a structure for strain detection (a second structure for strain detection) according to a second embodiment as viewed from above, FIG. 2B is a cross-sectional view taken along line IIB-IIB in FIG. 2A, and FIG. 2C is a cross-sectional view taken along line IIC-IIC in FIG. 2A;

FIG. 3A is a plan view showing a structure for strain detection (a third structure for strain detection) according to a third embodiment as viewed from above, FIG. 3B is a cross-sectional view taken along line IIIB-IIIB in FIG. 3A, and FIG. 3C is a cross-sectional view taken along line IIIC-IIIC in FIG. 3A;

FIG. 4A is a cross-sectional view showing one example of a formation position of a thin-walled region constituting a visualization structure, and FIG. 4B is a cross-sectional view showing another example of a formation position for the thin-walled region;

FIG. 5 is a cross-sectional view showing an example in which a visible member is disposed between a main body of the third structure for strain detection, and a target object to be inspected (indicated by the two-dot chain line);

FIG. 6A is a plan view showing a structure for strain detection (a fourth structure for strain detection) according to a fourth embodiment as viewed from above, FIG. 6B is a cross-sectional view taken along line VIB-VIB in FIG. 6A, and FIG. 6C is a cross-sectional view taken along line VIC-VIC in FIG. 6A;

FIG. 7A is a plan view showing a structure for strain detection (a fifth structure for strain detection) according to a fifth embodiment as viewed from above, FIG. 7B is a cross-sectional view taken along line VIIB-VIIB in FIG. 7A, and FIG. 7C is a cross-sectional view taken along line VIIC-VIIC in FIG. 7A;

FIG. 8A is a plan view showing a structure for strain detection (a sixth structure for strain detection) according to a sixth embodiment as viewed from above, FIG. 8B is a cross-sectional view taken along line VIIIB-VIIIB in FIG. 8A, and FIG. 8C is a cross-sectional view taken along line VIIIC-VIIIC in FIG. 8A;

FIG. 9A is a plan view showing another example of the second structure for strain detection as viewed from above, FIG. 9B is a cross-sectional view taken along line IXB-IXB in FIG. 9A, and FIG. 9C is a cross-sectional view taken along line IXC-IXC in FIG. 9A;

FIG. 10A is a plan view showing another example of the third structure for strain detection as viewed from above, FIG. 10B is a cross-sectional view taken along line XB-XB in FIG. 10A, and FIG. 10C is a cross-sectional view taken along line XC-XC in FIG. 10A;

FIG. 11A is a cross-sectional view showing a first example in which both ends of the main body are formed respectively to be thick-walled, and FIG. 11B is a plan view of the first example as viewed from above; and

**EP 3 267 149 A1**

FIG. 12A is a cross-sectional view showing a second example in which both ends of the main body are formed respectively to be thick-walled, and FIG. 12B is a cross-sectional view showing a third example.

Description of Embodiments

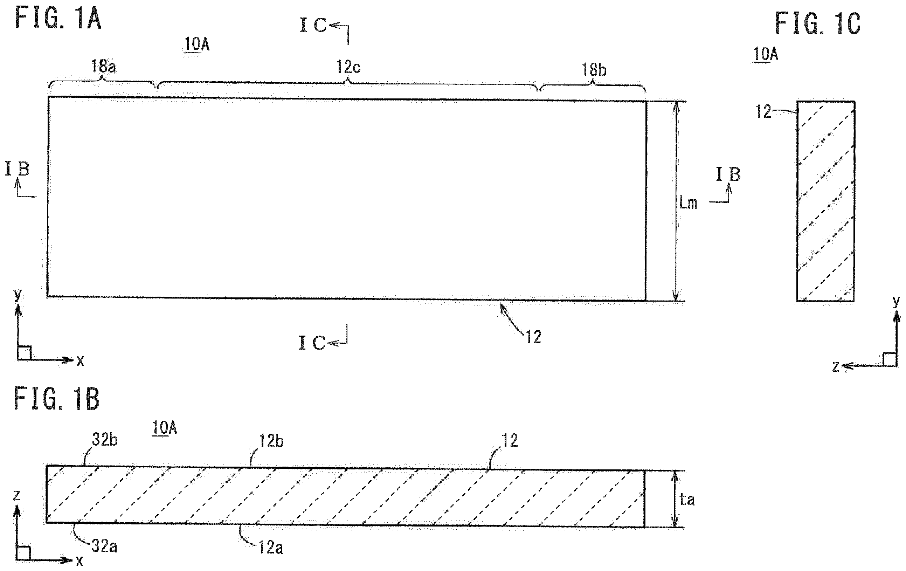

Embodiments of a structure for strain detection according to the present invention will be explained below with reference to FIGS. 1A through 12B. It should be noted that, in the present specification, a numerical range of "A to B" includes both the numerical values A and B, respectively, as the lower limit and upper limit values thereof.

Initially, as shown in FIGS. 1A to 1C, the structure for strain detection according to the first embodiment (hereinafter referred to as a first structure for strain detection 10A) includes a ceramic main body 12 which is attached to a target object (object to be inspected: not shown) in which strain is to be detected. Further, both end portions 18a and 18b excluding a central portion 12c of the main body 12 constitute attachment sections to be attached to the object to be inspected using, for example, tightening of bolts, or an adhesive or the like.

A ratio ($\sigma$/E) of a strength ($\sigma$: MPa) and a Young's modulus (E: GPa) of the first structure for strain detection 10A is preferably greater than or equal to 0.04%, more preferably, is greater than or equal to 0.1%, and particularly preferably, is greater than or equal to 0.3%. Further, the difference in the coefficient of thermal expansion between the structure for strain detection and the structure constituting the inspection target building preferably is less than or equal to $\pm 2$ ppm/K, and more preferably, is less than or equal to $\pm 1$ ppm/K.

An experimental example of the first structure for strain detection 10A will be described. In the experimental example, the size of the main body 12 was kept constant, and the change in the strain in the case that the material thereof was changed was confirmed. More specifically, in relation to Exemplary Embodiments 1 to 24 and Comparative Examples 1 and 2, a tensile load was applied in the longitudinal direction of the main body 12, and the amount of strain (distortion) at the time that the main body 12 underwent fracturing was confirmed. As shown in FIGS. 1A to 1C, in all of the Exemplary Embodiments 1 to 24 and in the Comparative Examples 1 and 2, a dimension in one direction (y-direction), and more specifically, a width Lm (see FIG. 1A), of the main body 12 was 20 mm. In this instance, the one direction is a direction perpendicular to the longitudinal direction (x-direction), as well as being perpendicular to the thickness direction (z-direction) of the main body 12. Further, a thickness ta (see FIG. 1B) of the main body 12 was 0.5 mm. The results are shown in the following Table 1.

[Table 1]

|  | Material | Strength $\sigma$ (MPa) | Young's Modulus E (GPa) | Fracture Strain Amount $\sigma$/E (%) | Fracture Strain Amount Actual Measured Value (%) | Thermal Expansion Coefficient $\alpha$ (ppm/K) |
|---|---|---|---|---|---|---|
| Exp. Example 1 | Alumina A | 380 | 280 | 0.14 | 0.12 to 0.15 | 8 |
| Exp. Example 2 | Alumina B | 350 | 320 | 0.11 | 0.10 to 0.12 | 8 |
| Exp. Example 3 | Alumina C | 300 | 400 | 0.08 | 0.07 to 0.09 | 8 |
| Exp. Example 4 | Alumina D | 350 | 400 | 0.09 | 0.08 to 0.10 | 8 |
| Exp. Example 5 | Zirconia A | 700 | 200 | 0.35 | 0.31 to 0.39 | 10 |
| Exp. Example 6 | Zirconia B | 1,000 | 180 | 0.56 | 0.50 to 0.61 | 10 |

(continued)

| | Material | Strength σ (MPa) | Young's Modulus E (GPa) | Fracture Strain Amount σ/E (%) | Fracture Strain Amount Actual Measured Value (%) | Thermal Expansion Coefficient α (ppm/K) |
|---|---|---|---|---|---|---|
| Exp. Example 7 | Silicon Nitride A | 600 | 300 | 0.20 | 0.18 to 0.22 | 3 |
| Exp. Example 8 | Silicon Nitride B | 1,000 | 300 | 0.33 | 0.30 to 0.36 | 3 |
| Exp. Example 9 | Silicon Nitride C | 1,200 | 320 | 0.38 | 0.34 to 0.41 | 3 |
| Exp. Example 10 | Aluminum Nitride A | 250 | 320 | 0.08 | 0.07 to 0.09 | 5 |
| Exp. Example 11 | Aluminum Nitride B | 350 | 320 | 0.11 | 0.10 to 0.12 | 5 |
| Exp. Example 12 | Silicon Carbide A | 400 | 450 | 0.09 | 0.08 to 0.10 | 4 |
| Exp. Example 13 | Silicon carbide B | 600 | 450 | 0.13 | 0.12 to 0.14 | 4 |
| Exp. Example 14 | sisic A | 250 | 340 | 0.07 | 0.07 to 0.08 | 2.4 |
| Exp. Example 15 | sisic B | 150 | 340 | 0.04 | 0.03 to 0.05 | 2.4 |
| Exp. Example 16 | Mullite | 280 | 210 | 0.13 | 0.12 to 0.15 | 5 |
| Exp. Example 17 | Cordierite A | 150 | 140 | 0.11 | 0.10 to 0.12 | 0 |
| Exp. Example 18 | Cordierite B | 240 | 137 | 0.18 | 0.16 to 0.14 | 0 |
| Exp. Example 19 | Aluminum Titanate | 40 | 6 | 0.67 | 0.60 to 0.73 | 1 |
| Exp. Example 20 | steatite | 200 | 130 | 0.15 | 0.14 to 0.17 | 9 |
| Exp. Example 21 | Forsterite | 200 | 150 | 0.13 | 0.12 to 0.15 | 10 |

(continued)

| | Material | Strength σ (MPa) | Young's Modulus E (GPa) | Fracture Strain Amount σ/E (%) | Fracture Strain Amount Actual Measured Value (%) | Thermal Expansion Coefficient α (ppm/K) |
|---|---|---|---|---|---|---|
| Exp. Example 22 | Titania | 300 | 260 | 0.12 | 0.10 to 0.13 | 12 |
| Exp. Example 23 | Mica | 100 | 50 | 0.20 | 0.18 to 0.22 | 11.7 |
| Exp. Example 24 | LTCC | 240 | 125 | 0.19 | 0.17 to 0.21 | 6.3 |
| Comp. Example 1 | Quartz Glass | 48 | 72 | 0.07 | Unmeasurable | 0.6 |
| Comp. Example 2 | Soda Glass | 150 | 71 | 0.21 | Unmeasurable | 9 |

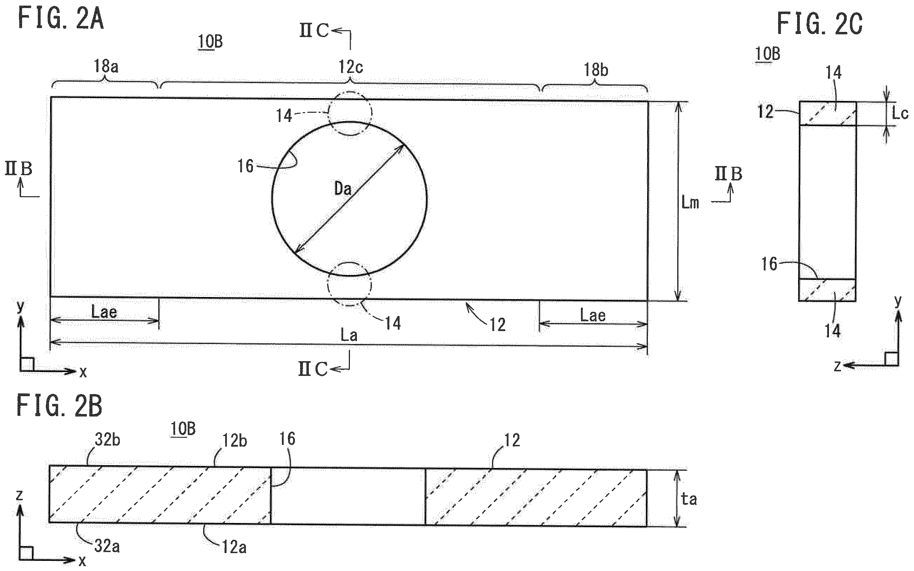

Next, as shown in FIGS. 2A to 2C, the structure for strain detection according to a second embodiment (hereinafter referred to as a second structure for strain detection 10B) includes a ceramic main body 12 which is attached to a target object (object to be inspected: not shown) in which strain is to be detected, and stress concentrated sections 14 formed in the main body 12, and which are fractured at a predetermined strain or greater. Concerning attachment of the main body 12 to the object to be inspected, it can be attached by a known method, and attachment thereof can be performed for example by bolt tightening, or through use of an adhesive or the like.

Any arbitrary shape can be adopted for the shape of the main body 12, however, assuming that the mounting surface of the object to be inspected is planar, for example, as shown in FIGS. 2A to 2C, a flat plate shape (typically, a rectangular parallelepiped shape) may be adopted. In this case, a ridge line portion thereof may be chamfered (a chamfered surface or a rounded surface). Hereinafter, cases will primarily be described in which the main body 12 is of a flat plate shape.

The second structure for strain detection 10B includes a circular through hole 16 at the center of the main body 12 as viewed from a planar surface (upper surface) thereof. Accordingly, the stress concentrated sections 14 are portions which are thin-walled owing to the presence of the through hole 16 formed within the main body 12. More specifically, assuming that a dimension in one direction (y-direction), and more specifically a width, of the main body 12 is represented by Lm (see FIG. 2A), and a dimension in the one direction of each of the stress concentrated sections 14 is represented by Lc (see FIG. 2C), then the inequality Lc < Lm is satisfied. Stated otherwise, the stress concentrated sections 14 are constituted by thin-walled regions in the one direction.

In addition to a circular shape, for the shape of the through hole 16 as viewed from the upper surface, there can be adopted an elliptical shape, a track shape, a rectangular shape, or the like. Further, both end portions 18a and 18b of the main body 12 constitute attachment sections to be attached to the object to be inspected using, for example, tightening of bolts, or an adhesive or the like.

The predetermined strain is a strain lying within a range that enables determination of whether or not the object to be inspected has been deformed by an amount in excess of an allowable stress, and for example, a deformation amount of 0.1%, 0.2%, or the like is selected. In this case, as objects to be inspected, there are included, for example, a pressure vessel, a frame made of metal (a frame of heavy machinery, a frame of a press machine, a frame of a device for applying a hydrostatic pressure, etc.), a utility pole, a steel tower, a concrete structure, a reinforced concrete structure, and the like. However, if the object to be inspected is an object having a yield point that clearly appears within a stress strain diagram, the amount of strain can be selected as lying within a range before and after the yield point and between which the yield point is sandwiched. In the case of an object to be inspected having a yield point that does not clearly appear in such a stress strain diagram, it is possible to select the amount of strain to lie within a range before and after the strain amount at a time of generated stress corresponding to a 0.2% proof stress.

One reason for selecting, as the predetermined strain, a strain as lying within a range of elastic deformation of the object to be inspected and which is less than the yield point is as follows. More specifically, even if a strain within the range of elastic deformation occurs in the structure, since the structure will return to its original position, it is difficult to comprehend if such a strain has occurred, that is, whether or not a load has been applied. Thus, for example, by periodically confirming whether fracturing of the stress concentrated sections 14 in the second structure for strain detection 10B has occurred, and if it has become fractured, by repeatedly performing an operation to replace it with a new second structure for strain detection 10B, it is possible to know how many times a strain of about 0.1% has occurred, and such knowledge can be used in analysis of aging of the object to be inspected. Of course, by shortening the inspection period, it is possible to know with greater accuracy the number of times that strains on the order of 0.1% have occurred.

As the ceramic that constitutes the main body 12, a ceramic containing zirconia is preferred. The strain when fracturing takes place is 0.56%, and by providing the stress concentrated sections 14, it is possible to cause the main body 12 to undergo fracturing at a strain within a range in which the object to be inspected is elastically deformed, for example, a strain of 0.1% or 0.2%, or the like. In addition, due to the fact that the coefficient of thermal expansion of zirconia is substantially the same as the coefficient of thermal expansion of carbon steel (mild steel) or reinforced concrete, it is possible to compensate for changes in temperature. This is connected with being able to detect strains without being influenced by changes in temperature, which is also advantageous in terms of improving detection accuracy.

The size of the main body 12 is limited from the visibility of the fracture and the size to which a ceramic member of a desired shape can be manufactured. More specifically, in order to confirm with a simple method such as visual inspection whether or not fracturing has occurred in the strain detecting ceramic, from the standpoint of visibility from a distance or the like, it is preferable for the width Lm of the main body 12 to be greater than or equal to 5 mm, and for the length La of the main body 12 to be greater than or equal to 10 mm. On the other hand, concerning the manufacturing process of the ceramic member which is constituted by ceramics, the ceramic member is manufactured by molding a ceramic powder and then firing the molded ceramic powder. In this case, since the strength of the molded body is small and is accompanied by a large amount of firing shrinkage on the order of several 10% during firing, in order to manufacture the main body 12 with a small amount of deformation and with dimensions as designed, there is naturally a limit to how large the main body 12 can be. More specifically, it is preferable for the width Lm of the main body 12 to be less than or equal to 100 mm, and for the length La of the main body 12 to be less than or equal to 300 mm. Furthermore, in relation to the thickness ta of the main body 12, although a large thickness ta thereof has a tendency to simplify manufacturing, the load generated at the time that strains are detected increases, which makes the method of fixing the main body 12 to the object to be inspected more difficult. Therefore, the thickness ta of the main body 12 is preferably less than or equal to 3 mm. Further, if the thickness ta thereof is too small, since cracking or deformation occurs during molding and firing, it is preferable for the thickness ta to be equal to or greater than 0.3 mm.

[First Experimental Example]

A first experimental example of the second structure for strain detection 10B will now be shown. Zirconia B (see Table 1 above) was used as the ceramic thereof. In the experimental example, the change in strain, the possibility of visibility of fracturing, and the propriety of manufacturing the main body 12 were confirmed for cases in which the size of the main body 12 and the diameter Da of the through hole 16 were changed. Concerning the strain, a tensile load was applied in the longitudinal direction of the main body 12, and the strain therein at the time that the main body 12 experienced fracturing was confirmed.

(Samples 1 to 7)

As shown in FIGS. 2A to 2C, in each of Samples 1 to 7, the length La of the main body 12 was 100 mm, the width Lm (the length in one direction of the main body 12) was 30 mm, and the thickness ta (see FIG. 2B) of the main body 12 was 1 mm. Concerning the diameter Da of the through hole 16, the diameter thereof was 4 mm in Sample 1, the diameter thereof was 8 mm in Sample 2, the diameter thereof was 9 mm in Sample 3, the diameter thereof was 11 mm in Sample 4, the diameter thereof was 15 mm in Sample 5, the diameter thereof was 19 mm in Sample 6, and the diameter thereof was 26 mm in Sample 7. The length of each of both end portions 18a and 18b, and more specifically, the length Lae along the longitudinal direction of the main body 12 was 20 mm. Using both of the end portions 18a and 18b, Samples 1 to 7 were fixed to a target object in which strain was to be detected.

(Sample 8)

In Sample 8, the main body 12 had a width Lm of 5 mm, a length La of 10 mm, and a thickness ta of 0.3 mm. The diameter Da of the through hole 16 was 0.67 mm. The respective lengths Lae of both end portions 18a and 18b were 2.5 mm. Using both of the end portions 18a and 18b, Sample 8 was fixed to a target object in which strain was to be detected.

(Sample 9)

In Sample 9, the main body 12 had a width Lm of 100 mm, a length La of 300 mm, and a thickness ta of 3 mm. The diameter Da of the through hole 16 was 87 mm. The respective lengths Lae of both end portions 18a and 18b were 50 mm. Using both of the end portions 18a and 18b, Sample 9 was fixed to a target object in which strain was to be detected.

(Comparative Example 3)

In Comparative Example 3, the main body 12 had a width Lm of 100 mm, a length La of 300 mm, and a thickness ta of 0.2 mm. The diameter Da of the through hole 16 was 63 mm. The respective lengths Lae of both end portions 18a and 18b were 50 mm. Using both of the end portions 18a and 18b, Comparative Example 3 was fixed to a target object in which strain was to be detected.

(Comparative Example 4)

In Comparative Example 4, the main body 12 had a width Lm of 3 mm, a length La of 7 mm, and a thickness ta of 0.3 mm. The diameter Da of the through hole 16 was 1.9 mm. The respective lengths Lae of both end portions 18a and 18b were 2 mm. Using both of the end portions 18a and 18b, Comparative Example 4 was fixed to a target object in which strain was to be detected.

(Comparative Example 5)

In Comparative Example 5, the main body 12 had a width Lm of 120 mm, a length La of 350 mm, and a thickness ta of 1 mm. The diameter Da of the through hole 16 was 76 mm. The respective lengths Lae of both end portions 18a and 18b were 50 mm. Using both of the end portions 18a and 18b, Comparative Example 5 was fixed to a target object in which strain was to be detected.

<Evaluation Results>

Evaluation results of Samples 1 to 9 and Comparative Examples 3 to 5 are shown in the following Table 2 together with a breakdown of items shown therein. In Table 2, the lengths Lae of both end portions 18a and 18b are expressed as "end portion length".

[Table 2]

| | Main Body Dimensions | | | | Through Hole | Strain at Time of Fracturing (%) | Visibility of Fracturing | Manufacturability |
|---|---|---|---|---|---|---|---|---|
| | Length La (mm) | End Portion Length Lae (mm) | Width Lm (mm) | Thickness ta (mm) | Diameter Da (mm) | | | |
| Sample 1 | 100 | 20 | 30 | 1 | 4 | 0.179 | ○ | Possible |
| Sample 2 | 100 | 20 | 30 | 1 | 8 | 0.166 | ○ | Possible |
| Sample 3 | 100 | 20 | 30 | 1 | 9 | 0.161 | ○ | Possible |
| Sample 4 | 100 | 20 | 30 | 1 | 11 | 0.151 | ○ | Possible |
| Sample 5 | 100 | 20 | 30 | 1 | 15 | 0.126 | ○ | Possible |
| Sample 6 | 100 | 20 | 30 | 1 | 19 | 0.096 | ○ | Possible |
| Sample 7 | 100 | 20 | 30 | 1 | 26 | 0.04 | ○ | Possible |
| Sample 8 | 10 | 2.5 | 5 | 0.3 | 0.67 | 0.179 | ○ | Possible |
| Sample 9 | 300 | 50 | 100 | 3 | 87 | 0.04 | ○ | Possible |
| Comparative Example 3 | 300 | 50 | 100 | 0.2 | 63 | Evaluation Impossible Because of Cracking | | Impossible |
| Comparative Example 4 | 7 | 2 | 3 | 0.3 | 1.9 | 0.1 | Difficult | Possible |
| Comparative Example 5 | 350 | 50 | 120 | 1 | 76 | Evaluation Impossible Due to Large Deformation | | Impossible |

EP 3 267 149 A1

From Table 2, it can be understood that Samples 1 to 9 exhibit good visibility of fracturing, and manufacturing thereof also is possible. On the other hand, in Comparative Example 3, cracks were generated during the manufacturing process, and visibility of strain at the time of fracturing could not be evaluated. In Comparative Example 4, although manufacturing thereof was possible, since the size was small, visibility of fracturing was poor, and it was difficult to visually recognize such fracturing. In Comparative Example 5, deformation due to the manufacturing process was significant, and since manufacturing thereof was not possible, strains occurring at the time of fracturing and visibility of such fracturing could not be evaluated.

[Second Experimental Example]

In the second experimental example, the length La of the second structure for strain detection 10B (the distance from one end of the end portion 18a to one end of the end portion 18b) was 100 mm, the width Lm thereof was 30 mm, and the thickness ta thereof was 0.5 mm, and under such conditions, a change in strain upon changing the diameter Da of the through hole 16 was confirmed. The respective lengths Lae of both end portions 18a and 18b were 20 mm. More specifically, concerning Samples 11 to 13 shown in the following Table 3, using both of the end portions 18a and 18b, each of the samples was fixed to a target object in which strain was to be detected. A tensile load was applied in a longitudinal direction of the main body 12, and the strain therein at the time of fracturing of the main body 12 was confirmed. The diameter Da of the through hole 16 was 4 mm in the case of Sample 11, 11 mm in the case of Sample 12, and 19 mm in the case of Sample 13. The results are shown in the following Table 3. In Table 3, the lengths Lae of both end portions 18a and 18b are expressed as "end portion length".

[Table 3]

| | Main Body Dimensions | | | | Through Hole | Strain at Time of Fracturing (%) |
|---|---|---|---|---|---|---|
| | Length La (mm) | End Portion Length Lae (mm) | Width Lm (mm) | Thickness ta (mm) | Diameter Da (mm) | |
| Sample 11 | 100 | 20 | 30 | 0.5 | 4 | 0.184 |
| Sample 12 | 100 | 20 | 30 | 0.5 | 11 | 0.172 |
| Sample 13 | 100 | 20 | 30 | 0.5 | 19 | 0.142 |

It can be understood from Table 3 that by changing the diameter Da of the through hole 16, the main body 12 can be made to undergo fracturing with a predetermined level of strain. Such a feature is also apparent from the results of Samples 1 to 7 of the first experimental example (see Table 2). More specifically, by suitably changing the dimension Lc in the one direction of the stress concentrated sections 14, the main body 12 can be fractured with a predetermined strain.

In this manner, in the second structure for strain detection 10B, when a load is applied to the object to be inspected, and, for example, a predetermined strain takes place in the object to be inspected, a predetermined strain is also generated in the main body 12 of the second structure for strain detection 10B, and the stress concentrated sections 14 thereof are then fractured. For example, cracks enter into the stress concentrated sections 14, and fracturing thereof occurs. Consequently, by confirming whether or not the stress concentrated sections 14 have been fractured, it can be confirmed whether or not a predetermined strain has taken place in the object to be inspected. Such a confirmation can easily be carried out with the naked eye.

Accordingly, by using the second structure for strain detection 10B, it is possible to confirm the presence of strains generated in the object to be inspected inexpensively, by visual inspection (including visual inspection through use of binoculars or the like), and without requiring a power source or electrical wiring.

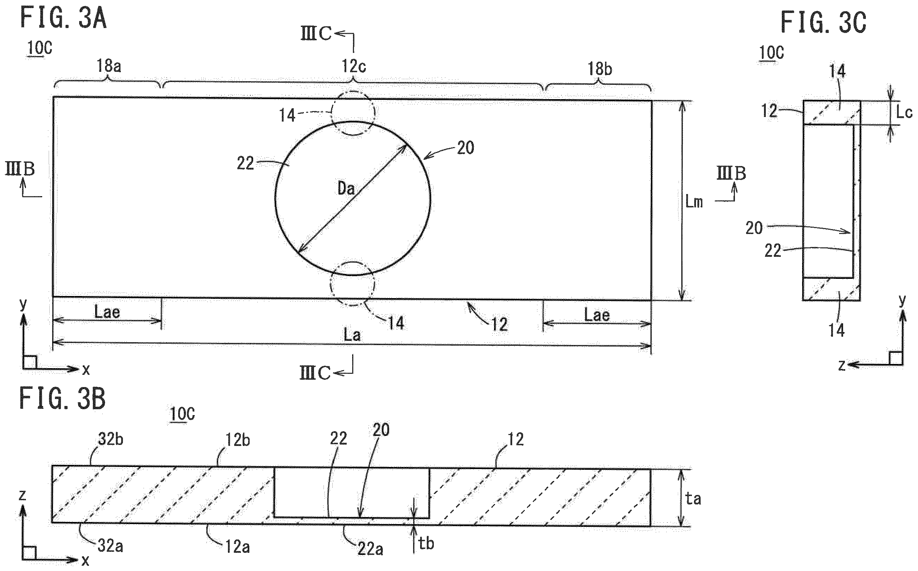

Next, a structure for strain detection according to a third embodiment (hereinafter referred to as a third structure for strain detection 10C) will be explained with reference to FIGS. 3A to 3C.

As shown in FIGS. 3A to 3C, the third structure for strain detection 10C has substantially the same configuration as the above-described second structure for strain detection 10B, but differs therefrom in that a structure portion (hereinafter referred to as a visualization structure 20) is included for visualizing the occurrence of the predetermined strain by way of a secondary fracture, which is induced by a fracture (primary fracture) of the stress concentrated sections 14.

The visualization structure 20 has a disk-shaped thin-walled region 22 formed integrally at the center of the main body 12, and which is thinner than the thickness of the main body 12. More specifically, the visualization structure 20 has a structure in which the through hole 16 (see FIG. 2A) of the second structure for strain detection 10B is closed by the thin-walled region 22.

Therefore, when a strain occurs in the main body 12 and the stress concentrated sections 14 experience a fracture (primary fracture), then taking this fracture as a starting point, fracturing (secondary fracturing) of the thin-walled region 22 is induced, and the totality or a portion of the thin-walled region 22 drops off. Consequently, by confirming whether or not the totality or a portion of the thin-walled region 22 has fallen off, it can be confirmed whether or not a predetermined strain has taken place in the object to be inspected. Such a confirmation can easily be carried out with the naked eye.

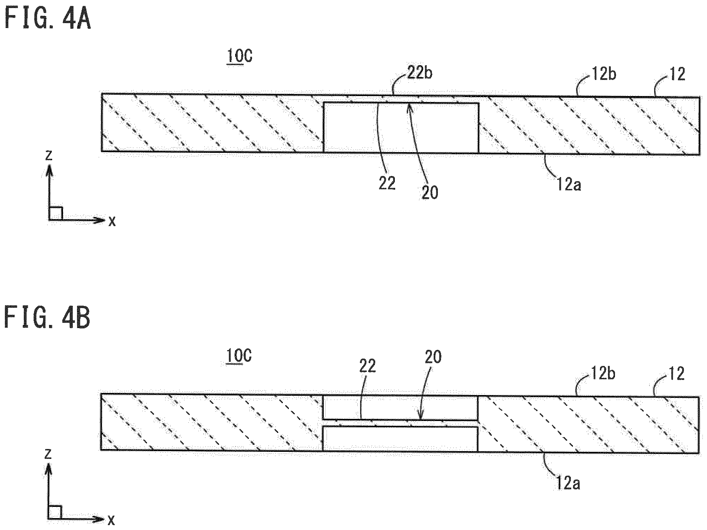

Positions where the thin-walled region 22 may be formed are the positions shown in FIGS. 3B, 4A, and 4B.

(a) As shown in FIG. 3B, one main surface 22a of the thin-walled region 22 may be formed so as to be the same as one main surface 12a of the main body 12.
(b) As shown in FIG. 4A, the other main surface 22b of the thin-walled region 22 may be formed so as to be the same as the other main surface 12b of the main body 12.
(c) As shown in FIG. 4B, the thin-walled region 22 may be formed at the center in the thickness direction of the main body 12.

Of course, the thin-walled region 22 may also be located between the position shown in (a) and the position shown in (b), or between the position shown in (b) and the position shown in (c). It is desirable that the wall thickness tb (see FIG. 3B) of the thin-walled region 22 is less than or equal to such a wall-thickness as not to alleviate or lessen the concentration of stress on the main body 12. However, if the thin-walled region 22 is too thin, there is a concern that deformation or cracking thereof may take place in the ceramic manufacturing processes such as molding and firing. Therefore, preferably, the wall thickness tb of the thin-walled region 22 is greater than or equal to 0.01 mm and less than or equal to 0.5 mm.

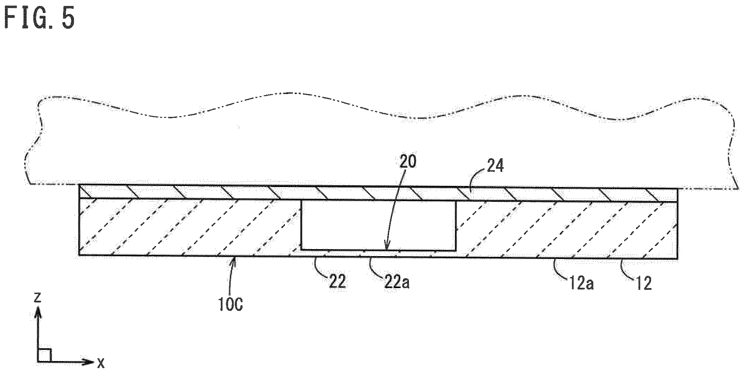

Further, as shown in FIG. 5, a visible member 24 preferably is disposed with an adhesive or the like on at least a portion facing toward the thin-walled region 22, between the main body 12 and the object to be inspected (indicated by the two-dot chain line). In this case, by the totality or a portion of the thin-walled region 22 after undergoing secondary fracturing dropping off, the visible member 24 becomes exposed, and thus, by confirming the exposure of the visible member 24, an observer can easily realize that a predetermined strain has occurred in the main body 12.

A metal film such as Al (aluminum) or the like, a fluorescent coating material, or a coloring agent or the like can be used as the visible member 24. The visible member 24 may be attached through an adhesive or the like to the object to be inspected, or may be attached through an adhesive or the like to a portion of the third structure for strain detection 10C facing toward the object to be inspected.

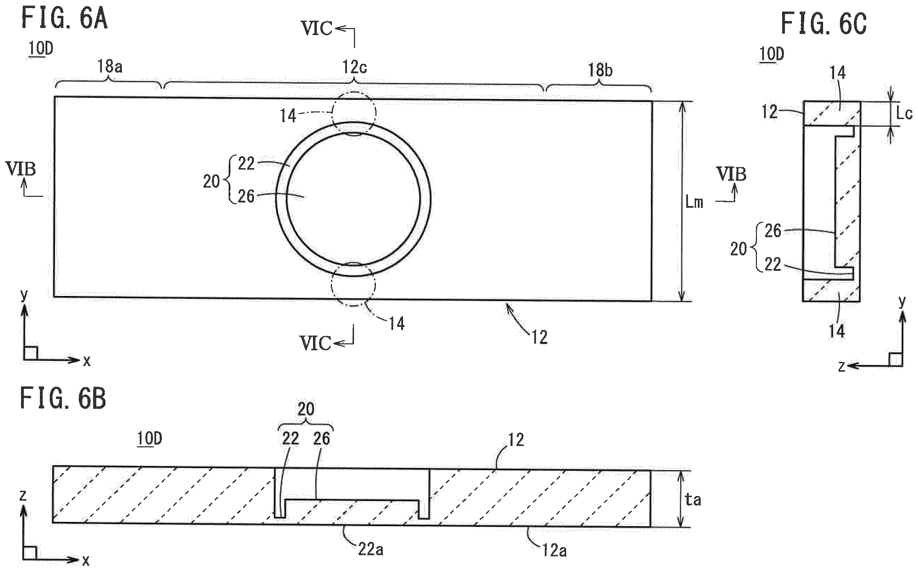

Next, a structure for strain detection according to a fourth embodiment (hereinafter referred to as a fourth structure for strain detection 10D) will be explained with reference to FIGS. 6A to 6C.

As shown in FIGS. 6A to 6C, the fourth structure for strain detection 10D is of substantially the same configuration as the above-described third structure for strain detection 10C, however, differs therefrom in that the thin-walled region 22 constituting the visualization structure 20 is provided in a frame shape. A portion surrounded by the frame-shaped thin-walled region 22 is thicker than the thin-walled region 22 and functions as a weight 26. The thickness of the portion that functions as a weight (hereinafter referred to as a "weighted region 26") is thicker than the thin-walled region 22, and preferably is less than or equal to the thickness of the main body 12.

Therefore, when a strain is generated in the main body 12 and the stress concentrated sections 14 experience a fracture (primary fracture), then taking this fracture as a starting point, a crack occurs in the thin-walled region 22. The crack expands in a frame shape along the thin-walled region 22 due to the presence of the weighted region 26, whereupon breakage or fracturing (secondary fracturing) of the thin-walled region 22 is induced. By the thin-walled region 22 undergoing such fracturing, the weighted region 26 falls off from the main body 12. Consequently, by confirming whether or not the weighted region 26 has fallen off, it can be confirmed whether or not a predetermined strain has taken place in the object to be inspected. Such a confirmation can easily be carried out with the naked eye.

In this case as well, the visible member 24 (see FIG. 5) preferably is disposed with an adhesive or the like on at least a portion facing toward the weighted region 26, between the main body 12 and the object to be inspected. Consequently, by the weighted region 26 dropping off due to secondary fracturing of the thin-walled region 22, the visible member 24 becomes exposed, and thus, by confirming the exposure of the visible member 24, an observer can easily realize that a predetermined strain has occurred in the main body 12.

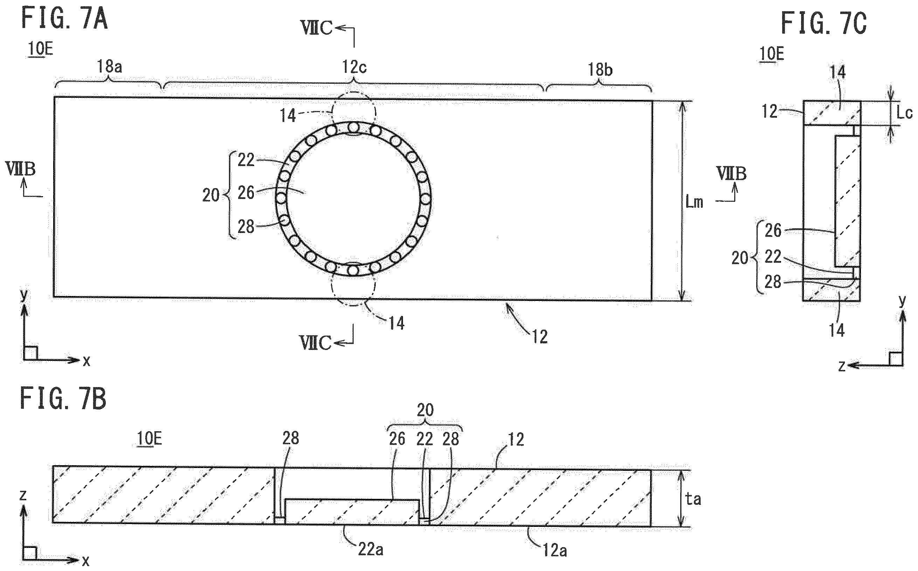

Next, a structure for strain detection according to a fifth embodiment (hereinafter referred to as a fifth structure for strain detection 10E) will be explained with reference to FIGS. 7A to 7C.

As shown in FIGS. 7A to 7C, the fifth structure for strain detection 10E is of substantially the same configuration as the above-described fourth structure for strain detection 10D, however, differs therefrom in that the thin-walled region 22, which is provided in a frame shape, is formed with at least one small-diameter through hole 28 therein. In the example of FIG. 7A, a plurality of through holes 28 are formed at equal intervals along the thin-walled region 22. Of course, it is not necessary that the through holes 28 be equally spaced, and the sizes of the diameters thereof may all be the same or may be different from each other.

In this case, when the stress concentrated sections 14 experience a fracture (primary fracture) and a crack occurs in the thin-walled region 22, development of the crack is accelerated due to the presence of the plurality of through holes 28, and the weighted region 26 can assuredly be made to drop off from the main body 12 at an early stage.

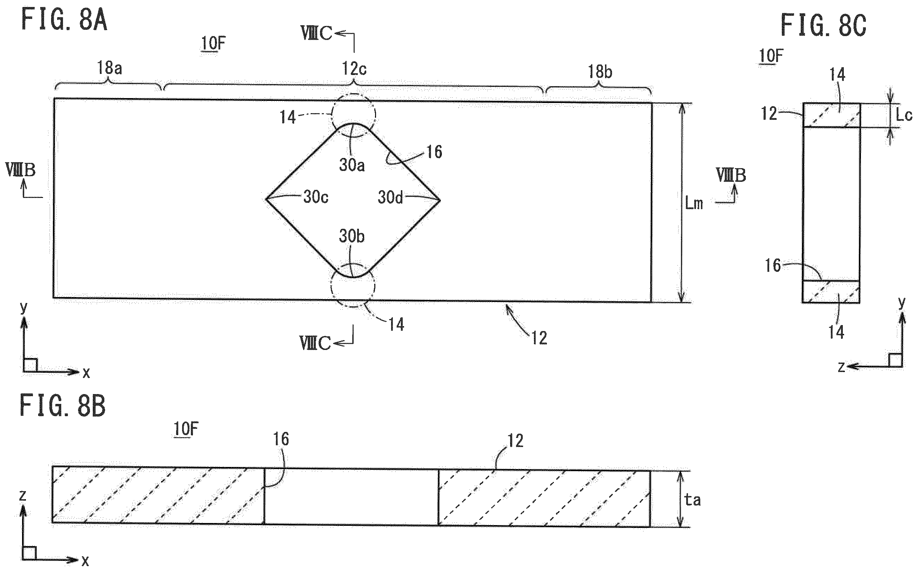

Next, a structure for strain detection according to a sixth embodiment (hereinafter referred to as a sixth structure for strain detection 10F) will be explained with reference to FIGS. 8A to 8C.

As shown in FIGS. 8A to 8C, the sixth structure for strain detection 10F is of substantially the same configuration as the above-described second structure for strain detection 10B, however, the shape of the through hole 16 thereof differs in the following ways.

More specifically, the shape of the through hole 16 is not a circular shape, but rather is a rectangular shape as viewed from above. Further, among the four apex portions 30a to 30d, two of the apex portions 30a and 30b, which constitute parts of the stress concentrated sections 14, are formed with curved shapes, respectively. The other two apex portions 30c and 30d may be formed with curved shapes, or may be of shapes having corners formed therein.

In the sixth structure for strain detection 10F, since the stress concentration factors of the stress concentrated sections 14 are changed by modifying the radius of curvature of the two apex portions 30a and 30b that constitute parts of the stress concentrated sections 14, the size of the through hole 16 can be kept substantially constant, and the main body 12 can be fractured with a predetermined level of strain while ensuring visibility of the fracture.

Moreover, the above-described shape in the sixth structure for strain detection 10F, and more specifically, the rectangular shape thereof as viewed from above, wherein among the four apex portions 30a to 30d thereof, the shapes of the two apex portions 30a and 30b, which constitute parts of the stress concentrated sections 14, are formed respectively in a curved shape, may also be applied to the visualization structures 20 of the third structure for strain detection 10C through the fifth structure for strain detection 10E which were described above.

In the above-described FIGS. 2A to 2C and FIGS. 3A to 3C, the shape of the through hole 16 of the second structure for strain detection 10B and the shape of the visualization structure 20 of the third structure for strain detection 10C, and in particular, the shapes thereof as viewed from above, are circular. However, apart therefrom, as was described above, the shapes thereof may also be elliptical.

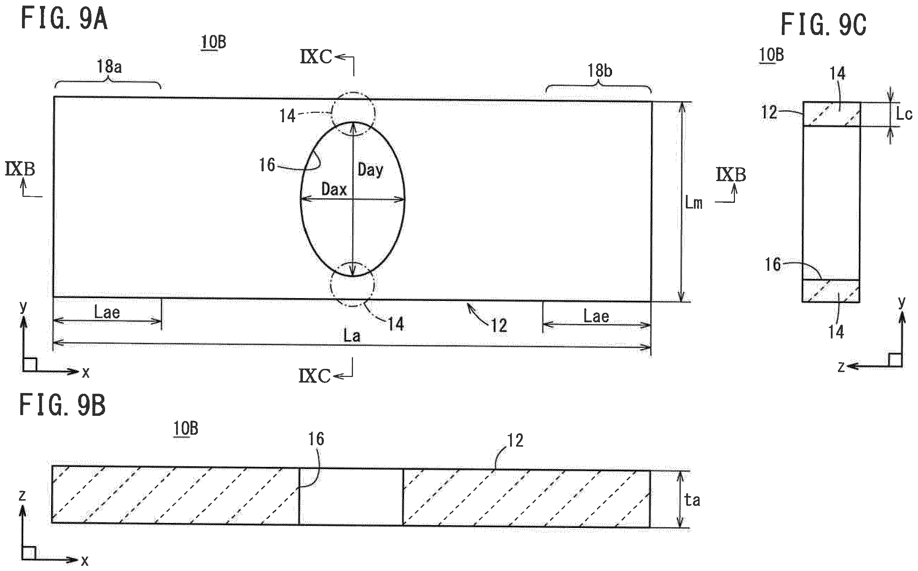

In this case, as shown in FIGS. 9A to 9C, in the second structure for strain detection 10B, a ratio (Dax/Day) of a diameter (axis in the x-direction) Dax of the through hole 16 in the x-direction, to a diameter (axis in the y-direction) Day of the through hole 16 in the y-direction may be less than 1, or alternatively, may be greater than 1. With the example of FIG. 9A, an example is shown in which the ratio (Dax/Day) is less than 1.

Similarly, as shown in 10A to 10C, in the third structure for strain detection 10C, a ratio (Dax/Day) of a diameter Dax of the visualization structure 20 in the x-direction, to a diameter Day of the visualization structure 20 in the y-direction may be less than 1, or alternatively, may be greater than 1.

Experimental examples (a third experimental example and a fourth experimental example) in relation to the second structure for strain detection 10B and the third structure for strain detection 10C will now be described. Zirconia B (see Table 1 above) was used as the ceramic thereof.

[Third Experimental Example]

In the third experimental example, the length La of the second structure for strain detection 10B shown in FIGS. 9A to 9C was 50 mm, the width Lm thereof was 30 mm, and the thickness ta thereof was 0.5 mm, and for a case in which the diameter Day of the through hole 16 in the y-direction was 19 mm, a change in strain upon changing the diameter Dax of the through hole 16 in the x-direction was confirmed. The respective lengths Lae of both end portions 18a and 18b were 10 mm. More specifically, concerning Samples 21 to 23 shown in the following Table 4, using both of the end portions 18a and 18b, the samples were fixed to a target object in which strain was to be detected. A tensile load was applied in a longitudinal direction of the main body 12, and the strain therein at the time of fracturing of the main body 12 was confirmed. The diameter Dax in the x-direction of the through hole 16 was 19 mm in the case of Sample 21, 9.5 mm in the case of Sample 22, and 2.85 mm in the case of Sample 23. The results are shown in the following Table 4. In Table 4, the lengths Lae of both end portions 18a and 18b are expressed as "end portion length".

[Table 4]

| | Main Body Dimensions | | | | Through Hole | | Strain at Time of Fracturing (%) |
|---|---|---|---|---|---|---|---|
| | Length La (mm) | End Portion Length Lae (mm) | Width Lm (mm) | Thickness ta (mm) | Diameter Day (mm) | Diameter Dax (mm) | |
| Sample 21 | 50 | 10 | 30 | 0.5 | 19 | 19 | 0.188 |
| Sample 22 | 50 | 10 | 30 | 0.5 | 19 | 9.5 | 0.119 |
| Sample 23 | 50 | 10 | 30 | 0.5 | 19 | 2.85 | 0.048 |

[Fourth Experimental Example]

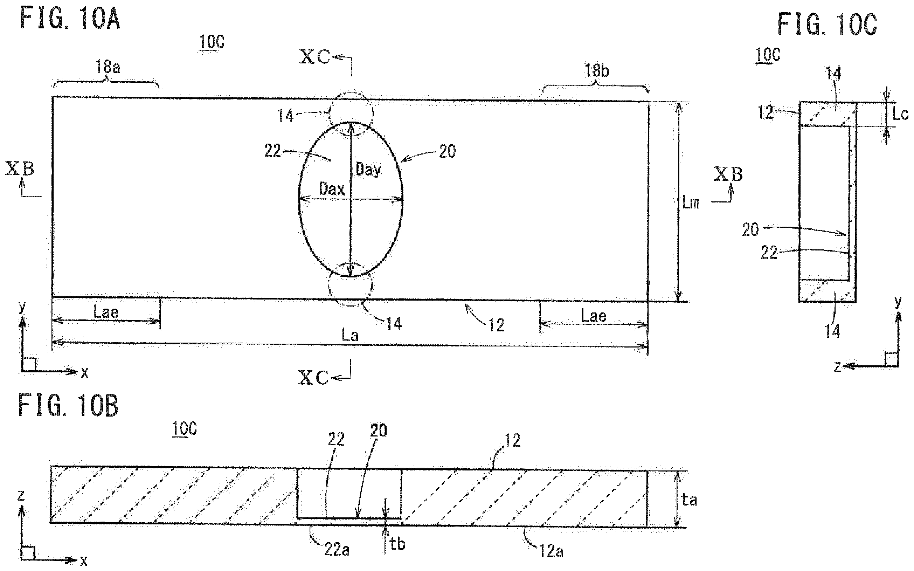

In the fourth experimental example, the length La of the third structure for strain detection 10C shown in FIGS. 10A to 10C was 50 mm, the width Lm thereof was 30 mm, and the thickness ta of the main body 12 was 0.5 mm, the thickness tb of the thin-walled region 22 of the visualization structure 20 was 0.1 mm, and for a case in which the diameter Day of the visualization structure 20 in the y-direction was 19 mm, a change in strain upon changing the diameter Dax of the visualization structure 20 in the x-direction was confirmed. The respective lengths Lae of both end portions 18a and 18b were 10 mm. More specifically, concerning Samples 31 to 33 shown in the following Table 5, using both of the end portions 18a and 18b, the samples were fixed to a target object in which strain was to be detected. A tensile load was applied in a longitudinal direction of the main body 12, and the strain therein at the time of fracturing of the main body 12 was confirmed. The diameter Dax in the x-direction of the visualization structure 20 was 19 mm in the case of Sample 31, 9.5 mm in the case of Sample 32, and 2.85 mm in the case of Sample 33. The results are shown in the following Table 5. In Table 5, the lengths Lae of both end portions 18a and 18b are expressed as "end portion length".

[Table 5]

| | Main Body Dimensions | | | | Visualization Structure | | | Strain at Time of Fracturing (%) |
|---|---|---|---|---|---|---|---|---|
| | | | | | Thin-Walled Region | | | |
| | Length La (mm) | End Portion Length Lae (mm) | Width Lm (mm) | Thickness ta (mm) | Thickness tb (mm) | Diameter Day (mm) | Diameter Dax (mm) | |
| Sample 31 | 50 | 10 | 30 | 0.5 | 0.1 | 19 | 19 | 0.204 |
| Sample 32 | 50 | 10 | 30 | 0.5 | 0.1 | 19 | 9.5 | 0.123 |
| Sample 33 | 50 | 10 | 30 | 0.5 | 0.1 | 19 | 2.85 | 0.048 |

From Table 4 and Table 5, it can be understood that even if the shapes of the through hole 16 and the visualization structure 20 (the shapes thereof as viewed from above) are elliptical, it is possible for the main body 12 to be fractured with a predetermined level of strain by modifying the diameters of the through hole 16 and the visualization structure 20, for example, by modifying only the diameter Dax in the x-direction, only the diameter Day in the y-direction, or both the diameter Dax in the x-direction and the diameter Day in the y-direction. More specifically, by suitably changing the dimension Lc in the one direction of the stress concentrated sections 14, the main body 12 can be fractured with a predetermined strain.

Moreover, as shown in the above examples, it is necessary to set the two diameters (axes) of the elliptical shape in the x-direction and the y-direction, respectively. If Dax and Day are equal (i.e., in the case of a circle), the diameters Dax and Day may be set in any direction.

Further, the elliptical shape described above may also be applied to the visualization structure 20 of the fourth structure for strain detection 10D and the fifth structure for strain detection 10E.

Incidentally, the main body 12 of the above-described first structure for strain detection 10A through the sixth structure for strain detection 10F may be constituted from both end portions 18a and 18b and the central portion 12c.

With the first structure for strain detection 10A, as shown in FIGS. 1A to 1C, both end portions 18a and 18b and the central portion 12c of the main body 12 have the same thickness, respectively, and one main surface 32a of both of the end portions 18a and 18b, and the one main surface 12a of the central portion 12c of the main body 12 are flush with each other, and further, the other main surface 32b of both of the end portions 18a and 18b and the other main surface 12b of the central portion 12c of the main body 12 are flush with each other.

With the second structure for strain detection 10B and the third structure for strain detection 10C, within the central portion 12c of the main body 12, a portion thereof other than the through hole 16 or the visualization structure 20, and both end portions 18a and 18b have the same thickness, respectively, and the one main surface 32a of both of the end portions 18a and 18b, and the one main surface 12a of the central portion 12c of the main body 12 are flush with each other, and further, the other main surface 32b of both of the end portions 18a and 18b and the other main surface 12b of the central portion 12c of the main body 12 are flush with each other.

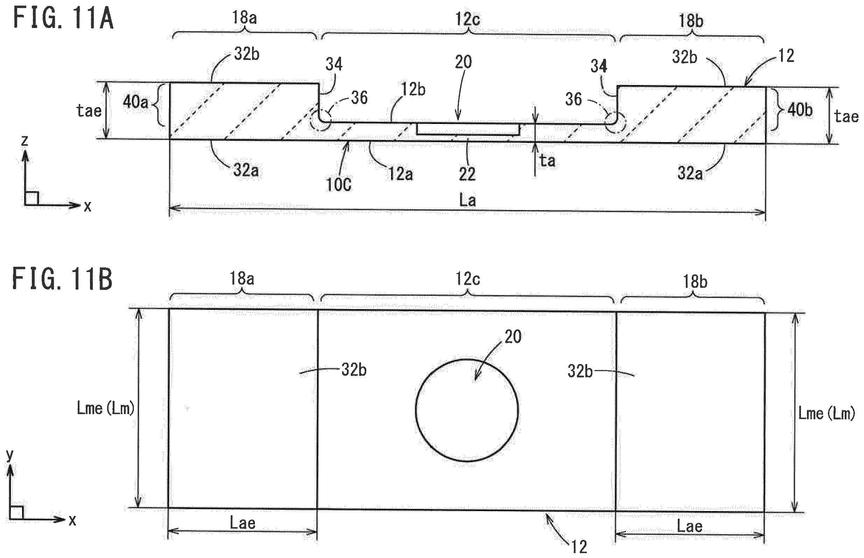

Although the structures described above are acceptable, apart therefrom, as shown in FIG. 11A to 12B, the thickness tae of both of the end portions 18a and 18b may be made greater than the thickness ta of the central portion 12c of the main body 12. More specifically, both end portions 18a and 18b may be formed to be thick-walled respectively, and steps 34 may be formed respectively between the central portion 12c and both end portions 18a and 18b of the main body 12. FIGS. 11A to 12B show examples of being applied to the third structure for strain detection 10C. In the examples shown in FIGS. 1A to 10C, the thickness of the central portion 12c is the same as the thickness of both of the end portions 18a and 18b, and therefore, the thickness of the main body 12 is expressed as "ta". However, in the examples of FIGS. 11A to 12B, since the thickness of both end portions 18a and 18b is greater than the thickness of the central portion 12c of the main body 12, the thickness of the central portion 12c is expressed as "ta", whereas the thickness of both end portions 18a and 18b is expressed as "tae".

According to the examples shown in FIGS. 11A to 12B, using thick-walled sections 40a and 40b of both of the end portions 18a and 18b, it is possible to easily fix the main body 12 to the object to be inspected. It is desirable for the thickness tae of both end portions 18a and 18b to be greater than or equal to 1 mm, in order to prevent interference between the central portion 12c and the object to be inspected. On the other hand, if the thickness tae of both end portions 18a and 18b is too thick, since the difference in wall-thickness from the central portion 12c becomes excessively large at the time of manufacturing the structure for strain detection, the central portion 12c becomes deformed, or cracks are generated between both of the end portions 18a and 18b. Therefore, it is preferable for the thickness tae of both end portions 18a and 18b to be less than or equal to 10 mm.

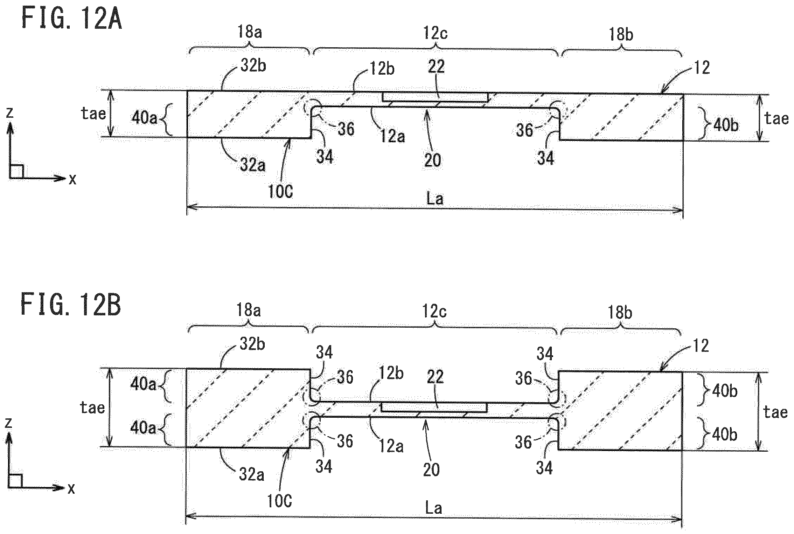

In the case of using surfaces of the thick-walled sections 40a and 40b of both end portions 18a and 18b, and furthermore, fixing them to the object to be inspected with an adhesive or the like, it is desirable that the following conditions (a) and (b) are satisfied. The surfaces of the thick-walled sections 40a and 40b make up the other main surface 32b in the examples of FIGS. 11A and 11B, the one main surface 32a in the example of FIG. 12A, and the one main surface 32a or the other main surface 32b in the example of FIG. 12B.

(a) The respective shapes of both end portions 18a and 18b are equivalent with each other.
(b) The areas of the surfaces of the thick-walled sections 40a and 40b of both end portions 18a and 18b are sufficiently large to support the load generated in the structure for strain detection at a time of reaching a predetermined amount of strain in the object to be inspected. Moreover, as shown in FIG. 11B, the surface areas of the thick-walled sections 40a and 40b are obtained by multiplying the length Lae along the lengthwise direction of the main body 12 by the length (width Lme) along the widthwise direction of the main body 12.

Further, it is preferable for the boundary portions between each of the steps 34 and the central portion 12c of the main body 12 to be formed in a curved shape. Owing to this feature, concentration of stresses at the boundary portions can be alleviated. In this case, the radius of curvature of the boundary portions is preferably 0.5 mm R or greater.

[Fifth Experimental Example]

In the fifth experimental example, the length La of the main body 12 of the structure for strain detection shown in FIGS. 11A and 11B was 100 mm, the width Lm thereof was 30 mm, the thickness (thickness ta of the central portion 12c) of the main body 12 was 0.5 mm, the lengths Lae (lengths along the lengthwise direction of the main body 12) of the thick-walled sections of both end portions 18a and 18b were 25 mm, the widths Lme (lengths along the widthwise direction of the main body 12) of the thick-walled sections of both end portions 18a and 18b were 30 mm, respectively, the thickness tb of the thin-walled region 22 of the visualization structure 20 was 0.1 mm, and for a case in which the diameter Day of the visualization structure 20 in the y-direction was 19 mm, a change in strain was confirmed upon changing the thicknesses tae of both end portions 18a and 18b, the radius of curvature (indicated as "boundary portion" in Table 6) of the boundary portions between the central portion 12c and both end portions 18a and 18b, as well as changing the diameter Dax in the x-direction of the visualization structure 20. More specifically, concerning Samples 41 to 43 shown in the following Table 6, a tensile load was applied in the longitudinal direction of the main body 12, and the strain therein at the time that the main body 12 experienced fracturing was confirmed. The thickness tae of both end portions 18a and 18b was 10 mm in the case of Sample 41, 3 mm in the case of Sample 42, and 1 mm in the case of Sample 43. The diameter Dax in the x-direction of the visualization structure 20 was 19 mm in the case of Sample 41, 7.26 mm in the case of Sample 42, and 2.85 mm in the case of Sample 43. The results are shown in the following Table 6. Moreover, the structure for strain detection that was used in the fifth experimental example was constituted by zirconia B (see Table 1 above) as a ceramic.

[Table 6]

| | Main Body Dimensions | | | End Portions | | | | Visualization Structure | | | Strain at Time of Fracturing (%) |
|---|---|---|---|---|---|---|---|---|---|---|---|
| | Length La (mm) | Width Lm (mm) | Central Portion Thickness ta (mm) | Length Lae (mm) | Width Lme (mm) | Thickness tae (mm) | Boundary Portions (mm R) | Thin-Walled Region — Thickness tb (mm) | Diameter Day (mm) | Diameter Dax (mm) | |
| Sample 41 | 100 | 30 | 0.5 | 25 | 30 | 10 | 3 | 0.1 | 19 | 19 | 0.204 |
| Simple 42 | 100 | 30 | 0.5 | 25 | 30 | 3 | 1 | 0.1 | 14 | 7.26 | 0.100 |
| Sample 43 | 100 | 30 | 0.5 | 25 | 30 | 1 | 0.5 | 0.1 | 19 | 2.05 | 0.048 |

From Table 6, it can be understood that by changing the thickness tae of the thick-walled sections of both end portions 18a and 18b, the radius of curvature of the boundary portions between the central portion 12c and both end portions 18a and 18b, and the diameter of the visualization structure 20, e.g., only the diameter Dax in the x-direction or only the diameter Day in the y-direction, or alternatively, both the diameter Dax in the x-direction and the diameter Day in the y-direction, it is possible for the main body 12 to be fractured with a predetermined level of strain. More specifically, by suitably changing the thickness tae of the thick-walled sections of both end portions 18a and 18b, and the dimension Lc in the one direction of the stress concentrated sections 14, the main body 12 can be fractured with a predetermined strain.

In addition, in the case that the tensile shear adhesive strength of the adhesive for attaching the main body 12 to the object to be inspected is 20 N/mm$^2$, since the thick-walled sections 40a and 40b of both end portions 18a and 18b are of the same shape, and the area that can be used for bonding can be assured to be 750 mm$^2$ (25 mm $\times$ 30 mm) on each of the respective sides, it is possible to support a load of 15,000 N. The loads at which fracturing occurs of Samples 41, 42 and 43 are values between about 5,500 N and 1,300 N, respectively, and sufficient adhesive strength can be secured.

As shown in FIG. 11A, the one main surface 32a of both of the end portions 18a and 18b, and the one main surface 12a of the central portion 12c of the main body 12 may be flush with each other, and further, the steps 34 may be formed between the other main surface 32b of both of the end portions 18a and 18b and the other main surface 12b of the central portion 12c of the main body 12.

Alternatively, as shown in FIG. 12A, the steps 34 may be formed between the one main surface 32a of both of the end portions 18a and 18b and the one main surface 12a of the central portion 12c of the main body 12, and further, the other main surface 32b of both of the end portions 18a and 18b, and the other main surface 12b of the central portion 12c of the main body 12 may be flush with each other.

Alternatively, as shown in FIG. 12B, the steps 34 may be formed between the one main surface 32a of both of the end portions 18a and 18b and the one main surface 12a of the central portion 12c of the main body 12, and further, the steps 34 may be formed between the other main surface 32b of both of the end portions 18a and 18b and the other main surface 12b of the central portion 12c of the main body 12.

Furthermore, boundary portions 36 between each of the steps 34 and the central portion 12c of the main body 12 are preferably formed in a curved shape, whereby concentration of stresses on the boundary portions 36 can be alleviated. In this case, the boundary portions 36 are preferably formed in a curved shape having a radius of curvature of 0.5 mm R or greater.

Next, there will briefly be described below a method for manufacturing the above-described first structure for strain detection 10A through the sixth structure for strain detection 10F. The term "structures for strain detection" will be used when referring collectively to the first structure for strain detection 10A through the sixth structure for strain detection 10F.

First, it should be noted that the method of manufacturing the first structure for strain detection 10A through the sixth structure for strain detection 10F is not particularly limited, and any of a doctor blade method, an extrusion method, a gel casting method, a powder pressing method, or an imprint method, etc., may be used arbitrarily. With respect to a complex shape, such as in the third structure for strain detection 10C through the fifth structure for strain detection 10E, it is particularly preferable for such structures to be manufactured using a gel cast method. In a preferred embodiment, the third structure for strain detection 10C through the fifth structure for strain detection 10E can be obtained by casting a slurry containing a ceramic powder, a dispersion medium and a gelling agent, allowing the slurry to gel to thereby obtain a molded body, and then subjecting the molded body to sintering (see Japanese Laid-Open Patent Publication No. 2001-335371). With respect to a simple shape, such as in the first structure for strain detection 10A and the second structure for strain detection 10B, a tape forming method such as a doctor blade method or the like is preferred.

As the material of the structures for strain detection, it is particularly preferable to use a raw material in which a 3 mol% yttria (Y$_2$O$_3$) auxiliary agent is added to a zirconia powder. Although yttria is preferred as the auxiliary agent, calcia (CaO), magnesia (MgO), and the like, can also be offered as examples.

The following methods may be mentioned as suitable techniques for the gel casting method.

(1) Together with an inorganic powder, a prepolymer, such as polyvinyl alcohol, epoxy resin, phenolic resin or the like, which serves as a gelling agent, is dispersed in a dispersion medium along with a dispersing agent, to thereby prepare a slurry, and after casting, the slurry is solidified by three-dimensional crosslinking using a crosslinking agent and gelatinization thereof.
(2) A slurry is solidified by chemically bonding a gelling agent and an organic dispersion medium having a reactive functional group. This method is the method disclosed in Japanese Laid-Open Patent Publication No. 2001-335371 of the present applicant.

It is a matter of course that the structures for strain detection according to the present invention are not limited to the embodiments described above, and various additional or modified configurations can be adopted therein without departing from the scope of the present invention.

For example, in the third structure for strain detection 10C through the fifth structure for strain detection 10E, the thin-walled region 22 may be constituted by a conductive ceramic. In this case, since the electrical characteristics of the conductive ceramic are changed by fracturing (secondary fracturing) of the thin-walled region 22, by perceiving such a change as an electrical signal and displaying it on a display or the like, the fact that a predetermined strain has occurred can be visualized.

**Claims**

1.  A structure for strain detection, comprising a ceramic main body (12) that is attached to a target object in which strain is to be detected, wherein a ratio ($\sigma/E$) of a strength ($\sigma$) to a Young's modulus (E) of the ceramic main body (12) is greater than or equal to 0.04%.

2.  The structure for strain detection according to claim 1, further comprising a stress concentrated section (14) which is fractured at a predetermined strain or greater, in the ceramic main body (12) that is attached to the target object in which strain is to be detected.

3.  The structure for strain detection according to claim 2, wherein:

    assuming a dimension of the entire main body (12) in one direction thereof is represented by Lm, and a dimension of the stress concentrated section (14) in the one direction is represented by Lc, then Lc < Lm; and
    the stress concentrated section (14) is constituted by a thin-walled portion in the one direction.

4.  The structure for strain detection according to claim 3, wherein the one direction is a direction which is perpendicular to a longitudinal direction of the main body (12) and also perpendicular to a thickness direction of the main body (12).

5.  The structure for strain detection according to any one of claims 2 to 4, wherein the main body (12) includes a structure portion (20) configured to visualize occurrence of the predetermined strain, by way of a secondary fracture, which is induced by a primary fracture of the stress concentrated section (14).

6.  The structure for strain detection according to claim 5, wherein the structure portion (20) includes a thin-walled region (22) that causes a portion of the main body (12) to drop off due to the secondary fracture.

7.  The structure for strain detection according to claim 6, wherein a length La of the main body (12) is greater than or equal to 10 mm and less than or equal to 300 mm, a width Lm of the main body (12) is greater than or equal to 5 mm and less than or equal to 100 mm, a thickness ta of a central portion (12c) of the main body (12) is greater than or equal to 0.3 mm and less than or equal to 3 mm, a thickness tae of each of both end portions (18a, 18b) of the main body (12) is greater than or equal to 1 mm and less than or equal to 10 mm and is thicker than the thickness ta of the central portion (12c), and a thickness tb of the thin-walled region (22) is greater than or equal to 0.01 mm and less than or equal to 0.5 mm and is thinner than the thickness ta of the central portion (12c).

8.  The structure for strain detection according to claim 6 or 7, wherein:
    the thin-walled region (22) is provided in a frame shape; and
    one part of the main body (12) is a portion that is surrounded by the thin-walled region (22).

9.  The structure for strain detection according to claim 8, wherein at least one through hole (28) is formed in the thin-walled region (22).

10. The structure for strain detection according to any one of claims 5 to 9, wherein the structure portion (20) includes a visible member (24) that is exposed by the secondary fracture.

11. The structure for strain detection according to any one of claims 5 to 9, wherein the structure portion (20) includes a conductive ceramic, electrical characteristics of which are changed by the secondary fracture.

12. The structure for strain detection according to any one of claims 2 to 4, wherein:

one through hole (16) is included in the main body (12); and

a curved portion of the through hole (16) constitutes a part of the stress concentrated section (14).

13. The structure for strain detection according to claim 12, wherein the through hole (16) is rectangular, and two apex portions (30a, 30b) thereof that constitute a part of the stress concentrated section (14) are formed respectively in a curved shape.

14. The structure for strain detection according to any one of claims 1 to 13, wherein the ceramic constituting the main body (12) contains zirconia.

15. The structure for strain detection according to any one of claims 2 to 14, wherein the predetermined strain is a strain in a range within which the target object is elastically deformed.

16. The structure for strain detection according to any one of claims 1 to 15, wherein:

both end portions (18a, 18b) of the main body (12) are formed respectively to be thick-walled, and steps (34) are formed respectively between a central portion (12c) of the main body (12) and both of the end portions (18a, 18b); and

a boundary portion (36) between each of the steps (34) and the central portion (12c) of the main body (12) is formed in a curved shape.

17. The structure for strain detection according to claim 16, wherein the boundary portion (36) is formed in a curved shape having a radius of curvature of 0.5 mm R or greater.

18. The structure for strain detection according to claim 16 or 17, wherein the main body (12) is fixed to the target object using respective thick-walled sections (40a, 40b) of both of the end portions (18a, 18b).

19. The structure for strain detection according to claim 18, wherein:

the thick-walled sections (40a, 40b) of both of the end portions (18a, 18b) are bonded and fixed to the target object; assuming that a length of each of the thick-walled sections (40a, 40b) at both of the end portions (18a, 18b) along a lengthwise direction of the main body (12) represents a length Lae of the thick-walled sections (40a, 40b), and a length of the thick-walled sections (40a, 40b) along a widthwise direction of the main body (12) represents a width Lme of the thick-walled sections (40a, 40b), then concerning each of the thick-walled sections (40a, 40b), areas of the thick-walled sections (40a, 40b), which are obtained respectively by multiplying the length Lae of the thick-walled sections (40a, 40b) by the width Lme of the thick-walled sections (40a, 40b), are equivalent to each other; and

the areas of the thick-walled sections (40a, 40b) are areas sufficient to support a load generated in the structure for strain detection when the target object reaches a predetermined amount of strain.

20. The structure for strain detection according to claim 19, wherein, assuming that a tensile shear adhesive strength of an adhesive by which the respective thick-walled sections (40a, 40b) of both of the end portions (18a, 18b) are bonded and fixed to the target object is represented by F ($N/mm^2$), each of the areas of the thick-walled sections (40a, 40b) is represented by A ($mm^2$), and the load generated in the structure for strain detection when the target object reaches the predetermined amount of strain is represented by L, then inequality A > L/F is satisfied.

EP 3 267 149 A1

## FIG. 1A

## FIG. 1B

## FIG. 1C

FIG. 2A

FIG. 2B

FIG. 2C

FIG. 3A

EP 3 267 149 A1

10C

18a     12c     IIIC ←     18b

14

22   20

Da

Lm

IIIB

Lae     14   12     Lae

La

IIIC ←

y

x

FIG. 3C

10C

14

12     Lc

IIIB

20

22

14

y

z ←

FIG. 3B

10C

32b     12b     22   20     12

z

ta

32a     12a     22a   tb

x

FIG. 4A

FIG. 4B

EP 3 267 149 A1

FIG. 5

EP 3 267 149 A1

FIG. 6A

FIG. 6B

FIG. 6C

EP 3 267 149 A1

FIG. 7A

10E

18a        12c        18b

VIIC ←

VIIB ↑          14

22
20 { 26        14
28

Lm

VIIB ↑

VIIC ←        14

12

y
└→ x

FIG. 7B

10E        28        20
                26 22 28        12

z
↑
└→ x        22a        12a

ta

FIG. 7C

10E

14

12        Lc

26
20 { 22
28

14

y
└→ z

EP 3 267 149 A1

FIG. 8A

FIG. 8C

10F

18a          10F          12c          18b

14

14                                    30a          16

VIIIB                                          VIIIB          12          14          Lc

30c          30d

Lm

30b

12          16

14          14

VIIIC          14

y                                                                    y

x                                                          z

EP 3 267 149 A1

FIG. 8B

10F          16          12

z                                                                    ta

x

FIG. 9C

FIG. 9A

FIG. 9B

FIG. 10A

FIG. 10C

FIG. 10B

EP 3 267 149 A1

FIG. 11A

FIG. 11B

EP 3 267 149 A1

# FIG. 12A

# FIG. 12B

**INTERNATIONAL SEARCH REPORT**

| | International application No. |
|---|---|
| | PCT/JP2016/055517 |

A. CLASSIFICATION OF SUBJECT MATTER
*G01B21/32*(2006.01)i, *G01L1/06*(2006.01)i, *G01M99/00*(2011.01)i

According to International Patent Classification (IPC) or to both national classification and IPC

B. FIELDS SEARCHED

Minimum documentation searched (classification system followed by classification symbols)
G01B21/32, G01B5/30, G01L1/06, G01M99/00

Documentation searched other than minimum documentation to the extent that such documents are included in the fields searched
Jitsuyo Shinan Koho          1922–1996   Jitsuyo Shinan Toroku Koho   1996–2016
Kokai Jitsuyo Shinan Koho    1971–2016   Toroku Jitsuyo Shinan Koho   1994–2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2012-73214 A (Keishin Kougyou Co., Ltd.), 12 April 2012 (12.04.2012), | 1-4,12, 14-16,18 |
| A | paragraphs [0035] to [0040] (Family: none) | 5-11,13,17, 19,20 |
| Y | Busseihyo, [online], 29 September 2014 (29.09. 2014), Ogura Jewel Industry Co., Ltd., [retrieval date 10 August 2015 (10.08.2015)], Internet <URL: http://www.ogura-indus.co.jp/ material/> | 1-4,12, 14-16,18 |
| Y | JP 6-74875 A (Ishikawajima-Harima Heavy Industries Co., Ltd.), 18 March 1994 (18.03.1994), paragraphs [0015], [0016]; fig. 1 (Family: none) | 4,12 |

[X]  Further documents are listed in the continuation of Box C.          [ ]  See patent family annex.

* Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| 28 April 2016 (28.04.16) | 17 May 2016 (17.05.16) |

| Name and mailing address of the ISA/ Japan Patent Office 3-4-3,Kasumigaseki,Chiyoda-ku, Tokyo 100-8915,Japan | Authorized officer Telephone No. |
|---|---|

Form PCT/ISA/210 (second sheet) (January 2015)

**INTERNATIONAL SEARCH REPORT**

International application No.

PCT/JP2016/055517

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2001-281120 A  (Kawasaki Heavy Industries, Ltd.),<br>10 October 2001 (10.10.2001),<br>paragraphs [0050], [0051]; fig. 1, 5<br>& US 2001/0037686 A1    & EP 1139088 A2<br>& CN 1318747 A | 16,18 |

Form PCT/ISA/210 (continuation of second sheet) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000065508 A
- JP 2002014014 A
- JP 2001335371 A